# FASCICULE DE BREVET EUROPEEN

(11) **EP 3 649 382 B1**
(45) Date de publication et mention de la délivrance du brevet: **10.03.2021**
(21) Numéro de dépôt: 18752552.2
(22) Date de dépôt: 04.07.2018
(51) Int. Cl.: F16H 61/431, F16H 61/46, B60K 17/348

(54) **PROCÉDÉ AMÉLIORÉ DE COMMANDE DE LA CYLINDRÉE D'UNE POMPE POUR UNE ASSISTANCE HYDRAULIQUE**
VERBESSERTES VERFAHREN ZUR STEUERUNG DER VERDRÄNGUNG EINER PUMPE FÜR HYDRAULISCHE UNTERSTÜTZUNG
IMPROVED METHOD FOR CONTROLLING THE DISPLACEMENT OF A PUMP FOR A HYDRAULIC ASSISTANCE

(30) Priorité: 07.07.2017 FR 1756424
(43) Date de publication de la demande: 13.05.2020
(73) Titulaire: Poclain Hydraulics Industrie, 60410 Verberie (FR)
(72) Inventeur: DIDIERJEAN, Claude, 60410 Verberie (FR)
(74) Mandataire: Cabinet Beau de Loménie
(86) Numéro de dépôt international: PCT/FR2018/051672
(87) Numéro de publication internationale: WO 2019/008277

(56) Documents cités:
- EP-A1- 0 993 982
- FR-A1- 3 026 811
- US-A1- 2007 101 709
- US-A1- 2014 100 079
- US-A1- 2014 244 117

## Description

### DOMAINE DE L'INVENTION

Le présent exposé concerne les machines hydrauliques à cylindrée variable, et plus précisément le pilotage de la cylindrée d'une telle machine hydraulique.

### ETAT DE LA TECHNIQUE ANTERIEURE

On connaît, l'avantage d'une transmission hydraulique, qui permet de délivrer un fort couple, à des vitesses modérées.

La transmission hydraulique peut être la transmission principale du véhicule ou être une transmission d'assistance, associée à une transmission mécanique principale. Par exemple, le brevet européen EP 0 993 982 divulgue l'utilisation combinée d'une transmission hydraulique et d'une transmission mécanique. Dans ce cas, la transmission hydraulique est utilisée dans des conditions particulières, en particulier pour réaliser une assistance de la transmission mécanique dans des conditions de circulation qui le nécessitent, par exemple en cas de perte d'adhérence d'au moins l'une des roues du véhicule lorsqu'il circule sur un terrain glissant tel que celui d'un chantier de construction.

US 2014/100079 A divulgue un procédé de commande d'un dispositif de transmission dans lequel on pilote la cylindrée de la pompe hydraulique entraînant des roues motrices auxiliaires de manière à obtenir une vitesse proportionnelle à la vitesse des roues principales.

Qu'elle soit la transmission principale ou une transmission d'assistance, la transmission hydraulique peut être utilisée dans des conditions de circulation difficiles. Dans certains cas, elle doit être utilisée à très basse vitesse, par exemple lorsque le véhicule circule sur un terrain particulièrement glissant ou accidenté, notamment pour franchir un obstacle tel qu'un dos d'âne ou une bordure de trottoir, ou bien pour sortir d'une ornière, notamment dans la boue. Dans une telle situation, la transmission hydraulique doit délivrer un couple significatif et entrainer les roues à une vitesse très faible, mais suffisante pour permettre au véhicule de circuler et, le cas échéant, de passer l'obstacle.

La vitesse de sortie des moteurs hydrauliques est fonction du débit de la pompe, c'est-à-dire du produit de la vitesse d'entraînement de la pompe par sa cylindrée. Par exemple, on utilise une pompe à cylindrée continûment variable et c'est donc en faisant varier cette cylindrée qu'on fait varier le débit de refoulement de la pompe. Lorsque la transmission hydraulique est une transmission d'assistance, l'entraînement de la pompe peut être le moteur d'entraînement de la transmission mécanique.

Ainsi, en principe, en connaissant la cylindrée des moteurs, on règle leur vitesse de sortie sur une valeur cible en fixant le débit de la pompe à une valeur cible ce qui, à vitesse d'entrainement donnée de la pompe, revient à fixer la cylindrée de la pompe à une cylindrée cible. C'est par exemple ce qui est fait classiquement pour une transmission hydraulique d'assistance, lorsqu'il s'agit de fournir par cette assistance un couple d'assistance de la transmission mécanique et donc, de faire en sorte que la vitesse de sortie des moteurs hydrauliques attelés aux roues du véhicule soit cohérente avec la vitesse donnée par la transmission mécanique (elle peut être égale à cette vitesse ou, au contraire, être légèrement supérieure ou légèrement inférieure, selon que l'on souhaite obtenir un effet d'assistance positive ou de retenue).

Cependant, il a été constaté que les transmissions d'assistance présentent communément des performances variables notamment en fonction des conditions d'utilisation et des caractéristiques du véhicule associé. Ainsi, on observe fréquemment des situations dans lesquelles l'assistance hydraulique a un effet dégradé et/ou retardé. Plus précisément, la pompe hydraulique alimentant l'assistance est pilotée de manière à délivrer un débit égal à une valeur cible à laquelle est additionné un offset. Or, cet offset doit prendre en compte les particularités du système hydraulique et de la configuration du véhicule équipé du système hydraulique, qui peuvent être différentes de celles d'un autre véhicule, et peut donc être relativement important. Autrement dit l'offset déterminé pour un bon fonctionnement d'un véhicule peut être inadapté pour un autre véhicule du même type, ou bien l'offset déterminé pour un véhicule neuf peut être inadapté au bout d'un certain temps de fonctionnement, par usure des composants ou des pneumatiques, ou du travail sous une charge différente, ou encore de variations dans la monte de pneumatiques ou de roues différentes. Dans certaines conditions d'utilisation, notamment en cas de patinage des roues, un tel offset peut conduire à un retard de la mise en service de l'assistance, et également à une cylindrée insuffisante de la pompe hydraulique pour assurer l'assistance.

Le présent exposé vise ainsi à répondre au moins partiellement à ces problématiques.

### PRESENTATION DE L'INVENTION

A cet effet, le présent exposé concerne un procédé de commande d'un dispositif de transmission d'un véhicule, le dispositif comprenant une transmission hydraulique ayant n moteurs hydrauliques entrainant des roues porteuses du véhicule, n étant un entier naturel non nul, et une pompe hydraulique apte à être entraînée par un entrainement pour alimenter les moteurs hydrauliques en fluide,
dans lequel on pilote la cylindrée de la pompe hydraulique pour qu'elle délivre un débit constant aux n moteurs hydrauliques proportionnel à la vitesse de roues principales entraînées en rotation par l'entrainement, caractérisé en ce que le pilotage de cylindrée de la pompe hydraulique est réalisé au moyen d'une constante de correction et d'une variable de correction,
la variable de correction étant déterminée en temps réel,
la constante de correction étant composée de la somme d'une constante théorique et d'une constante ajustée, la constante théorique étant définie en fonction du comportement théorique de la transmission hydraulique, et la constante ajustée étant définie et corrigée lorsque le véhicule est dans des conditions d'utilisations prédéterminées, afin de traduire l'état réel du véhicule.

Selon un exemple, ladite constante ajustée est stockée dans une unité de mémoire, et réévaluée lors de l'exécution d'une commande d'évaluation.

Selon un mode de réalisation particulier d'un tel exemple, ladite commande d'évaluation est réalisée lors de chaque mise en service du véhicule.

En variante, lors de la commande d'évaluation, la valeur de la constante ajustée est modifiée pour être égale à un pourcentage de la valeur de la variable de correction, ledit pourcentage étant compris entre 80 et 95%.

Selon un exemple, la constante ajustée traduit notamment la circonférence de roulement de chaque essieu du véhicule entrainé par un desdits moteurs hydrauliques, les variations de rendement des différents composants de la transmission hydraulique et d'éléments mécaniques du véhicule.

Selon un exemple, la variable de correction est inférieure ou égale à une valeur seuil. On peut alors typiquement émettre un signal d'erreur lorsque la variable de correction présente une valeur supérieure ou égale à ladite valeur seuil, ou plus généralement lorsque la valeur absolue de la variable de correction dépasse une valeur seuil.

Le présent exposé concerne également un véhicule comprenant un dispositif de transmission configuré pour être commandé selon le procédé tel que défini précédemment.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente schématiquement un véhicule muni d'une assistance hydraulique sur un essieu,
- les figures 2A, 2B, 2C et 2D schématisent le fonctionnement d'une assistance hydraulique pilotée via un procédé de pilotage conventionnel, et
- les figures 3A, 3B, 3C et 3D schématisent le fonctionnement d'une assistance hydraulique pilotée via un procédé de pilotage selon l'invention.

Sur l'ensemble des figures, les éléments en commun sont repérés par des références numériques identiques.

### DESCRIPTION DETAILLEE D'EXEMPLES DE REALISATION

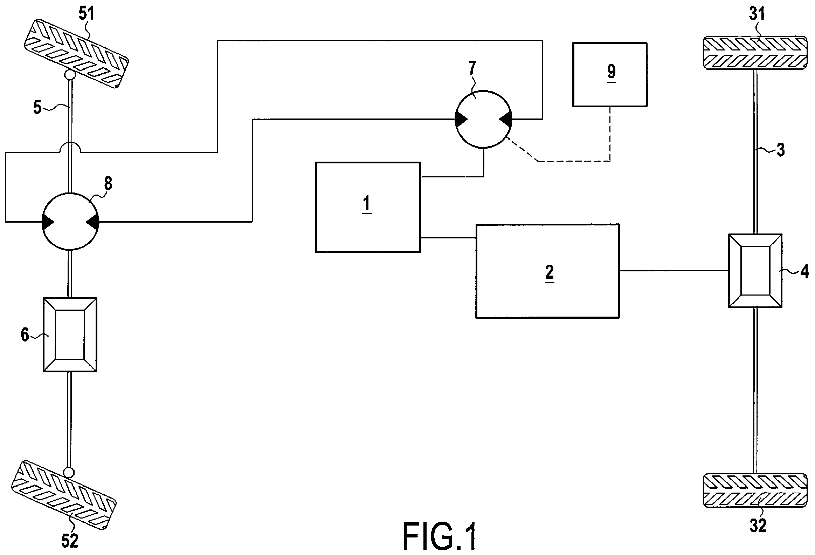

La figure 1 représente schématiquement un véhicule muni d'une assistance hydraulique sur un essieu.

On représente sur cette figure un moteur 1 formant un entrainement pour un premier essieu 3 muni de roues 31 et 32, ici représenté équipé d'un premier différentiel 4. Le moteur 1 est typiquement un moteur thermique, relié au différentiel 4 via une boite de vitesse 2. L'essieu 3 est ainsi typiquement l'essieu que l'on qualifie de « principal » pour le véhicule. D'une manière plus générale, les roues 31 et 32 sont des roues motrices principales ou habituelles du véhicule.

Le véhicule est également équipé d'une transmission d'assistance sur un second essieu 5 muni d'un second différentiel 6 et de deux roues 51 et 52, qui sont ici représentées comme étant des roues directrices (on comprendra que ce mode de réalisation est donné à titre d'exemple, et que la nature directrice ou non des roues de l'essieu entrainé par la transmission d'assistance est sans impact sur l'invention). D'une manière plus générale, les roues 51 et 52 sont des roues porteuses habituelles du véhicule.

La transmission d'assistance est ici représentée schématiquement comme comprenant une pompe hydraulique 7 et un moteur hydraulique 8.

Une transmission tout à fait équivalente peut être réalisée en associant un moteur hydraulique à chaque roue 51,52 le différentiel 6 pouvant alors être supprimé dans la mesure où les roues 51 et 52 ne sont alors pas liées en rotation ce qui procure un effet différentiel. Dans ce cas les moteurs associés aux deux roues 51 et 52 sont branchés hydrauliquement en parallèle à l'admission et au refoulement de la pompe 7.

Qu'il s'agisse du montage avec différentiel ou non, le moteur 8 peut tourner à la vitesse des roues, ou un rapport de démultiplication ou de multiplication peut exister entre le moteur 8 et les roues 51,52.

La pompe hydraulique 7 est couplée au moteur 1 qui permet ainsi d'en assurer l'entrainement. La pompe hydraulique 7 délivre ainsi un débit au moteur hydraulique 8, de manière à ce que ce dernier applique un couple moteur sur le second essieu 5.

le moteur hydraulique 8 est typiquement un appareil hydraulique de type à pistons radiaux et à cylindrée fixe. La pompe hydraulique 7 est typiquement un appareil hydraulique du type à pistons axiaux, et à cylindrée variable, pouvant alterner entre une configuration de roue libre dans laquelle ils présentent une cylindrée nulle (par exemple par rétractation de pistons dans leurs logements respectifs, ou par désengagement du bloc cylindres pour les machines à pistons radiaux, ou par mise en position a cylindrée nulle du plateau d'une machine à pistons axiaux), et une configuration de service (dans laquelle la cylindrée est non nulle). On comprendra que le fonctionnement demeure inchangé dans une configuration où la pompe hydraulique 7 entraine plusieurs moteurs hydrauliques. Plus généralement, le présent exposé s'applique pour une pompe hydraulique 7 associée à n moteurs hydrauliques, avec n entier naturel non nul.

En fonctionnement, c'est le moteur 1 qui assure l'entrainement « principal » du véhicule. La transmission d'assistance est typiquement engagée dans des conditions particulières, par exemple en cas de perte d'adhérence ou pour le franchissement d'obstacles.

Lorsque la transmission d'assistance est mise en service, un contrôleur 9 pilote la cylindrée de la pompe hydraulique 7 de manière à ce qu'elle délivre un débit en fonction de la vitesse de rotation du premier essieu 3. Ce débit est typiquement calculé de manière à ce que la vitesse de rotation des roues du second essieu 5 soit égale ou sensiblement supérieure à la vitesse de rotation des roues du premier essieu 3, de manière à réaliser une assistance au déplacement, et ne pas freiner le déplacement du véhicule.

La cylindrée de la pompe hydraulique 7 est ainsi déterminée pour être égale à une valeur cible, typiquement fixe, pour chaque rapport de la boite de vitesse 2 qui est engagé. Plus précisément, en fonction de la vitesse des roues principales 31 et 32 du premier essieu 31 du véhicule (ou de la valeur d'un paramètre qui y est lié), et de la vitesse de rotation de la pompe hydraulique 7 (ou de la valeur d'un paramètre qui y est lié, par exemple la vitesse de rotation du moteur 1), on détermine la valeur de cylindrée théorique correspondant au débit souhaité afin d'entrainer les roues porteuses 51 et 52 à la vitesse de rotation souhaitée. En considérant un véhicule se déplaçant dans des conditions prédéterminées et constantes, la valeur de cylindrée ainsi déterminée est donc constante. On comprend cependant qu'en fonctionnement dans des conditions réelles, la valeur cible de pression et de cylindrée va évoluer en fonction du temps, en fonction de la vitesse de rotation des roues de l'essieu principal 3 entrainé par le moteur 1 (ou d'un paramètre qui y est lié).

Le contrôleur 9 détermine une commande pour modifier la cylindrée de la pompe hydraulique 7. Cette commande prend en compte plusieurs composantes : une valeur théorique C basée sur la vitesse de rotation des roues du premier essieu 3, une constante de correction et une variable de correction.

La variable de correction Vc vise à compenser à tout moment un excès ou un défaut de cylindrée de la pompe hydraulique 7.

La constante de correction Cc traduit l'état du système d'assistance, comme on le détaille ci-après.

La constante de correction intègre deux composantes ; une constante théorique Ct et une constante ajustée Ca.

La cylindrée de la pompe hydraulique 7 est ainsi égale à C + Vc + Cc, avec Cc = Ca + Ct.

La constante théorique Ct est déterminée en fonction du comportement théorique de l'assistance hydraulique, notamment en fonction des pertes de charges théoriques dans le circuit hydraulique associé.

La constante ajustée Ca est quant à elle évaluée puis réévaluée dans des conditions d'utilisation données. Elle traduit l'état réel du véhicule dans son ensemble, et permet ainsi de prendre des compte des paramètres ne pouvant pas être déterminés avec précision de manière théorique tels que l'état des pneumatiques, l'usure des composants, les fuites, la circonférence de roulement de chaque essieu du véhicule entrainé par un moteur hydraulique 8, les variations de rendement des différents composants de la transmission hydraulique et d'éléments mécaniques du véhicule...La circonférence de roulement peut en effet varier dans le temps sur un essieu en fonction de la charge du véhicule, ou du gonflage des pneumatiques.

La constante ajustée Ca est typiquement corrigée à chaque mise en service du véhicule, ou lors de l'exécution d'une commande d'évaluation.

Plus précisément, la constante ajustée Ca est évaluée en fonction notamment de la variable de correction Vc, de manière à minimiser cette dernière.

Lors d'une première mise en service du véhicule, la constante ajustée Ca est typiquement nulle. La cylindrée de la pompe hydraulique 7 est ainsi égale à C + Vc + Cc, soit C + Vc + Ca + Ct, avec Ca = 0.

Une commande d'évaluation est alors exécutée, typiquement par le contrôleur 9, par exemple lors du démarrage du véhicule, ou lors de la mise en service de l'assistance hydraulique, ou encore lorsque le véhicule est dans des conditions prédéterminées, pouvant notamment inclure les conditions suivantes: l'assistance hydraulique est activée, la pompe hydraulique 7 délivre un débit permettant d'obtenir une pression cible prédéterminée, le véhicule n'est pas en situation de patinage, le véhicule se déplace typiquement à une vitesse prédéterminée ou comprise dans une plage de valeurs prédéterminée, présente une accélération inférieure ou égale à une valeur seuil, et se déplace en ligne droite.

La commande d'évaluation va alors définir la constante ajustée Ca, par exemple en lui attribuant la valeur de la variable de correction Vc à un instant donné (ou une valeur moyenne de la variable de correction Vc sur une durée prédéterminée), ou une valeur proportionnelle à la valeur de la variable de correction Vc, par exemple 0,8 Vc, 0,9 Vc, ou encore 0,95 Vc.

Une fois la constante ajustée Ca ainsi modifiée, on comprend que la variable de correction Vc diminue alors fortement, dans la mesure où la constante de correction Cc comprenant la constante ajustée Ca permet d'obtenir une cylindrée très proche de la cylindrée souhaitée. Cette valeur de Ca est représentative de la cylindrée nécessaire pour ajuster la vitesse de l'essieu porteur (c'est-à-dire l'essieu 5 dans l'exemple illustré sur la figure 1) vis-à-vis de l'essieu moteur (c'est-à-dire l'essieu 3 dans l'exemple illustré sur la figure 1) dans la configuration instantanée du véhicule.

La valeur de la constante ajustée Ca peut ensuite être réévaluée et le cas échéant modifiée par exemple dans les conditions précitées.

De manière avantageuse, la valeur de la constante ajustée Ca est stockée en mémoire non volatile, par exemple intégrée au contrôleur 6, de manière à pouvoir être prise en compte lors d'un démarrage ultérieur de l'assistance hydraulique et/ou du véhicule, au lieu de redémarrer avec une valeur Ca nulle.

Selon un exemple, la valeur de la variable de correction Vc est limitée, ce qui permet de limiter l'amplitude de la variation de cylindrée de la pompe hydraulique 7.

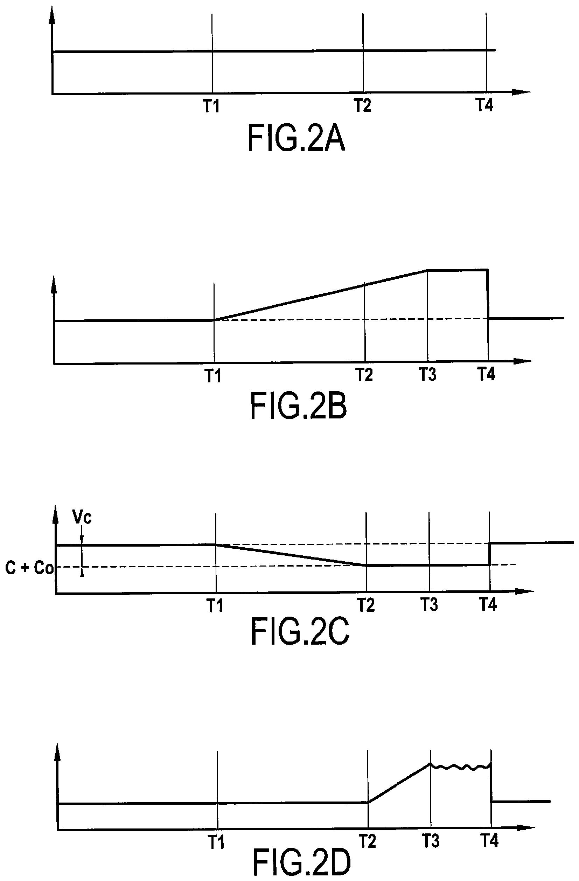

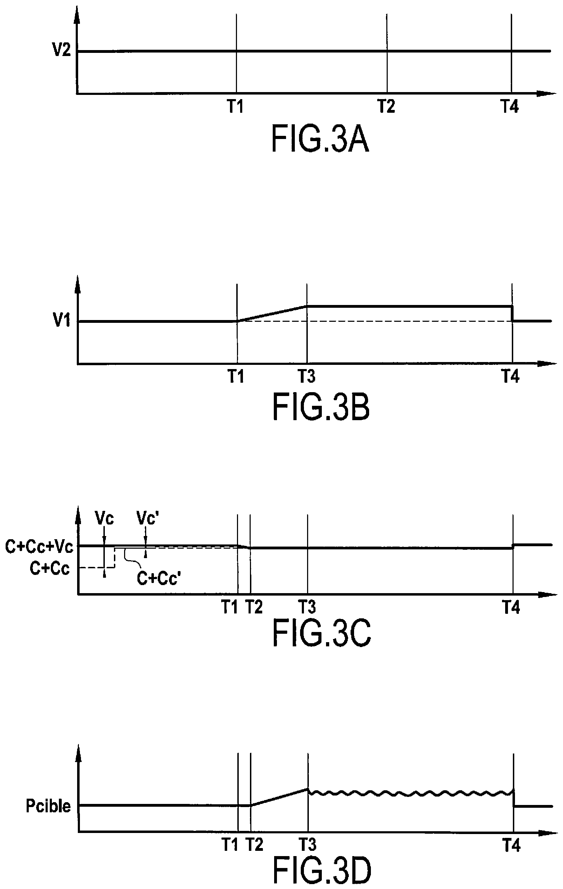

On représente sur les figures 2A à 2D et 3A à 3D des graphes mettant en avant le fonctionnement et l'effet de l'invention par rapport à un procédé de pilotage conventionnel.

Les figures 2A à 2D présentent plusieurs graphes illustrant le fonctionnement d'une assistance hydraulique pilotée via un procédé de pilotage conventionnel, tandis que les figures 3A à 3D présentent plusieurs graphes illustrant le fonctionnement d'une assistance hydraulique pilotée via un procédé de pilotage selon l'invention.

On décrit dans un premier temps le fonctionnement d'une assistance hydraulique pilotée via un procédé de pilotage conventionnel en référence aux figures 2A à 2D, dans lesquelles :
- 2A, qui représente la vitesse des roues du second essieu 5 (i.e. la vitesse des roues d'un essieu entraîné par une assistance hydraulique),
- 2B, qui représente la vitesse des roues du premier essieu 3 (i.e. la vitesse des roues d'un essieu entraîné par un entraînement principal d'un véhicule),
- 2C, qui représente la cylindrée de la pompe hydraulique 7 et
- 2D, qui représente la pression délivrée par la pompe hydraulique 7, alimentant ainsi le moteur hydraulique 8.

On considère ici un exemple dans lequel le véhicule se déplace à vitesse constante. Il est entraîné par son moteur principal, typiquement le moteur thermique 1 si on considère le véhicule représenté schématiquement sur la figure 1.

On décrit ci-après les différentes étapes.

### Entre T0 et Tl.

Les roues du premier essieu 3 entrainé par le moteur thermique 1 se déplacent initialement à vitesse constante V1, comme représenté sur le graphe 2B entre T0 et T1. Les roues du second essieu 5 associées à l'assistance hydraulique se déplacent également à vitesse constante V2 (graphe 2A). La pompe hydraulique est pilotée pour délivrer une pression constante Pcible (graphe 2D), et est donc pilotée de manière à présenter une cylindrée (graphe 2C) égale à une cylindrée théorique C à laquelle on additionne une constante de correction Co et une variable de correction (ou « offset ») Vc. La pression Pcible est déterminée pour donner un comportement neutre à l'assistance, c'est-à-dire à ne pas fournir un effort de traction significatif.

### Entre T1 et T2.

A l'instant T1, le premier essieu 3 entre en situation de patinage. Comme on le voit sur le graphe 2B, la vitesse de rotation des roues en situation de patinage augmente donc rapidement. Une telle situation entraine une baisse du couple moteur sur le premier essieu 3. C'est donc l'assistance hydraulique associée au second essieu 5 qui doit compenser cette perte de couple. La pompe hydraulique 7 cherche ici à maintenir une pression constante Pcible en vue de maintenir un couple suffisant sur le second essieu 5 (cf. graphe 2D). Afin de maintenir cette pression constante Pcible, la cylindrée de la pompe va progressivement diminuer jusqu'à atteindre la cylindrée théorique C+Co. L'offset Vc est ainsi « consommé » afin de maintenir une pression constante en sortie de la pompe hydraulique 7. Pendant cette période de consommation de l'offset Vc, l'assistance hydraulique n'a alors aucun effet sur le second essieu 5.

### Entre T2 et T3.

Les roues du premier essieu 3 sont toujours en situation de patinage, et la vitesse de rotation continue d'augmenter (graphe 2B).A l'instant T2, la cylindrée de la pompe atteint la valeur théorique C (graphe 2C). L'offset Vc est alors entièrement consommé. La pression en sortie de la pompe hydraulique 7 augmente alors (graphe 2D), jusqu'à atteindre une valeur seuil à un instant T3.

### Entre T3 et T4.

Lorsque la pression en sortie de la pompe hydraulique 7 atteint la valeur seuil à un instant T3, l'assistance hydraulique devient effective, et exerce alors un couple sur le second essieu 5 assurant un entraînement du véhicule, de manière à maîtriser la vitesse de rotation des roues du premier essieu 3 (graphe 2B). Cependant, cette assistance hydraulique est alors réalisée avec une cylindrée réduite (graphe 2C) ; l'assistance hydraulique n'est ainsi pas réalisée de manière optimale.

### A partir de T4.

A l'instant T4, le patinage cesse. Les roues du premier essieu 3 retrouvent leur vitesse de rotation initiale (graphe 2B), et la pression en sortie de la pompe hydraulique 7 reprend également sa valeur initiale Pcible (graphe 2D). La cylindrée de la pompe hydraulique 7 est modifiée pour reprendre sa valeur initiale.

On décrit à présent le fonctionnement d'une assistance hydraulique pilotée au moyen d'un procédé selon l'invention en référence aux figures 3A à 3D.

Tout comme les figures 2A à 2D, les figures 3A à 3D sont en plusieurs graphes ;
- 3A, qui représente la vitesse des roues du second essieu 5 (i.e. la vitesse des roues d'un essieu entrainé par une assistance hydraulique),
- 3B, qui représente la vitesse des roues du premier essieu 3 (i.e. la vitesse des roues d'un essieu entrainé par un entrainement principal d'un véhicule),
- 3C, qui représente la cylindrée de la pompe hydraulique 7 et
- 3D, qui représente la pression délivrée par la pompe hydraulique 7, alimentant ainsi le moteur hydraulique 8.

### Entre T0 et T1.

Les roues du premier essieu 3 entrainé par le moteur thermique 1 se déplacent initialement à vitesse constante V1, comme représenté sur le graphe 3B entre T0 et T1. Les roues du second essieu 5 associées à l'assistance hydraulique se déplacent également à vitesse constante V2 (graphe 3A). La pompe hydraulique est pilotée pour délivrer une pression constante Pcible (graphe 3D), et est donc pilotée de manière à présenter une cylindrée relativement constante (graphe 3C).

La cylindrée de la pompe hydraulique 7 est initialement égale à C + Cc + Vc, avec C valeur théorique de cylindrée, Cc constante de correction et Vc variable de correction comme déjà décrit précédemment, l'ajustement de la cylindrée étant réalisé dans les limites de la variable de correction Vc prédéterminée.

A un instant Te, on réalise une commande d'évaluation de la cylindrée de la pompe hydraulique 7. Comme décrit précédemment, la constante de correction est alors ajustée en fonction de la variable de correction, afin de minimiser cette dernière. En effet, La constante de correction intègre deux composantes ; une constante théorique Ct et une constante ajustée Ca. La constante théorique Ct demeure inchangée, tandis que la constante ajustée est modifiée, par exemple pour correspondre à 0,9 ou 0,95 Vc lors de l'exécution de la commande d'évaluation. La constante de correction prend ainsi une nouvelle valeur Cc', tandis que la variable de correction Vc est fortement réduite (on la désigne alors par Vc'), et a alors une valeur pouvant ainsi être égale à 10% ou 5% de sa valeur précédant la commande d'évaluation. On comprend ici que l'on peut exécuter plusieurs commandes d'évaluation de manière successive afin d'affiner la valeur de la constante ajustée Ca et donc de la constante de correction Cc, le fonctionnement demeurant alors inchangé.

Dans l'exemple représenté, la variable de correction Vc est représentée comme ayant une valeur positive. On comprend cependant que cette variable de correction Vc peut avoir une valeur positive ou négative, c'est-à-dire représenter un rayon de roulement trop grand ou trop petit par rapport à ce qui est prévu à l'origine dans la valeur C. Il est donc possible que l'ajustement de la cylindrée de pompe soit positif ou négatif à la mise en route, pour obtenir la pression Pcible. En conséquence la correction qui s'en suivra sera positive ou négative.

Il est de plus possible de limiter les ajustements de cylindrée résultant de Vc ou de Vc' en leur conférant des bornes. Les bornes de la variable de correction peuvent être identiques ou distinctes selon que la variable de correction Vc (ou Vc') a une valeur positive ou négative.

Il est par ailleurs possible de configurer le contrôleur 9 de manière à générer des codes d'erreur pour le conducteur ou pour l'agent de maintenance si les bornes sont atteintes.. Le fait d'atteindre une borne peut en effet être le signe d'une situation anormale sur le véhicule. Par exemple le montage de roues de dimension inadaptée, ou le fait d'avoir un pneumatique très dégonflé.

### Entre T1 et T2.

A l'instant T1, le premier essieu 3 entre en situation de patinage. Comme on le voit sur le graphe 3B, la vitesse de rotation des roues en situation de patinage augmente donc rapidement.

Comme précédemment, cette situation entraine une augmentation du couple sur le second essieu 5. La pompe hydraulique 7 maintient dans un premier temps une pression constante Pcible (graphe 3D), tandis que la variable de correction Vc diminue jusqu'à être entièrement « consommée » (graphe 3C).

Comme on le comprend à la lecture de ce qui précède, l'exécution de la commande d'évaluation a permis de minimiser la valeur de la variable de correction Vc. La durée nécessaire pour que cette variable de correction Vc soit réduite à zéro et donc pour que la cylindrée de la pompe hydraulique 7 atteigne la valeur C+Cc' est donc fortement réduite par rapport à l'exemple représenté sur les figures 2A à 2D.

### Entre T2 et T3.

Les roues du premier essieu 3 sont toujours en situation de patinage, et la vitesse de rotation continue d'augmenter (graphe 3B).A l'instant T2, la cylindrée de la pompe atteint la valeur théorique C (graphe 3C). L'offset Vc est alors entièrement consommé. La pression en sortie de la pompe hydraulique 7 augmente alors (graphe 3D), jusqu'à atteindre une valeur seuil à un instant T3.

### Entre T3 et T4.

Lorsque la pression en sortie de la pompe hydraulique 7 atteint la valeur seuil à un instant T3, l'assistance hydraulique devient pleinement effective, et exerce alors un couple sur le second essieu 5 assurant un entrainement du véhicule, de manière à maîtriser la vitesse de rotation des roues du premier essieu 3 (graphe 3B). Contrairement à l'exemple représenté sur les figures 2A à 2D, on voit ici que la cylindrée de la pompe hydraulique 7 est ici très proche de la valeur de cylindrée idéale pour une parfaite synchronisation des essieux du véhicule (graphe 3C), la valeur de Vc ayant été minimisée. L'assistance hydraulique est ainsi réalisée avec une cylindrée optimale.

### A partir de T4.

A l'instant T4, le patinage cesse. Les roues du premier essieu 3 retrouvent leur vitesse de rotation initiale (graphe 3B), et la pression en sortie de la pompe hydraulique 7 reprend également sa valeur initiale Pcible (graphe 3D). La cylindrée de la pompe hydraulique 7 est modifiée pour reprendre sa valeur C+Cc'+Vc'.

En considérant les procédés de pilotage décrits en référence aux figures 2 et 3, on comprend ainsi que le procédé de pilotage proposé présente plusieurs avantages par rapport aux procédés de pilotage conventionnels.

En premier lieu, on voit que l'assistance hydraulique devient effective plus rapidement, du fait de la valeur Vc qui est minimisée. La durée nécessaire pour que cette variable Vc soit annulée est par conséquent fortement réduite. On observe en effet clairement sur les figures 2A à 2D et 3A à 3D que l'intervalle de temps s'écoulant entre les instants T1 et T2 est fortement réduit sur les figures 3A à 3D par rapport aux figures 2A à 2D.

Par ailleurs, l'assistance hydraulique entre en service avec une cylindrée optimale, contrairement à un système de pilotage conventionnel dans lequel l'assistance hydraulique entre en service avec une valeur de cylindrée dégradée. On observe en effet sur les figures 3A à 3D que l'assistance hydraulique entre en service (entre T3 et T4) avec une valeur de cylindrée proche de la valeur initiale, tandis que dans le cas des figures 2A à 2D, la valeur de cylindrée de la pompe hydraulique 7 lorsque l'assistance hydraulique est en service est fortement réduite.

L'efficacité de l'assistance est donc augmentée à la fois en termes de temps de réponse et en effort de traction.

La valeur de la constante ajustée Ca lorsque cette dernière est stockée dans une unité de mémoire peut également être exploitée lors des opérations de maintenance du véhicule. En effet, on comprend qu'une constante ajustée Ca ayant une valeur élevée traduit un ajustement important de la cylindrée, et donc des écarts importants par rapport au comportement théorique du système. A l'inverse, une constante ajustée Ca ayant une valeur faible traduit un système ayant un fonctionnement proche du modèle théorique, et présentant donc a priori une adaptation au véhicule ou à l'usure ou plus généralement des défauts réduits.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Procédé de commande d'un dispositif de transmission d'un véhicule, le dispositif comprenant une transmission hydraulique ayant n moteurs hydrauliques (8) entrainant des roues porteuses (51, 52) du véhicule, n étant un entier naturel non nul, et une pompe hydraulique (7) apte à être entrainée par un entrainement (1) pour alimenter les moteurs hydrauliques (8) en fluide,
dans lequel on pilote la cylindrée de la pompe hydraulique (7) pour qu'elle délivre un débit constant aux n moteurs hydrauliques (8) proportionnel à la vitesse de roues principales (31, 32) entrainées en rotation par l'entrainement (1),
**caractérisé en ce que** le pilotage de cylindrée de la pompe hydraulique (7) est réalisé au moyen d'une constante de correction (Cc) et d'une variable de correction (Vc),
la variable de correction (Vc) étant déterminée en temps réel,
la constante de correction (Cc) étant composée de la somme d'une constante théorique (Ct) et d'une constante ajustée (Ca), la constante théorique (Ct) étant définie en fonction du comportement théorique de la transmission hydraulique, et la constante ajustée (Ca) étant définie et corrigée lorsque le véhicule est dans des conditions d'utilisations prédéterminées, afin de traduire l'état réel du véhicule.

2. Procédé selon la revendication 1, dans lequel ladite constante ajustée (Ca) est stockée dans une unité de mémoire, et réévaluée lors de l'exécution d'une commande d'évaluation.

3. Procédé selon la revendication 2, dans lequel ladite commande d'évaluation est réalisée lors de chaque mise en service du véhicule.

4. Procédé selon l'une des revendications 2 ou 3, dans lequel lors de la commande d'évaluation, la valeur de la constante ajustée (Ca) est modifiée pour être égale à un pourcentage de la valeur de la variable de correction (Vc), ledit pourcentage étant compris entre 80 et 95%.

5. Procédé selon l'une des revendications 1 à 4, dans lequel la constante ajustée (Ca) traduit notamment la circonférence de roulement de chaque essieu du véhicule entrainé par un desdits moteurs hydrauliques (8), les variations de rendement des différents composants de la transmission hydraulique et d'éléments mécaniques du véhicule.

6. Procédé selon l'une des revendications 1 à 5, dans lequel la variable de correction (Vc) est inférieure ou égale à une valeur seuil.

7. Procédé selon la revendication 6, dans lequel on émet un signal d'erreur lorsque la variable de correction (Vc) présente une valeur supérieure ou égale à ladite valeur seuil.

8. Véhicule comprenant un dispositif de transmission configuré pour être commandé selon le procédé de l'une quelconque des revendications 1 à 7.

## Patentansprüche

1. Verfahren zur Steuerung einer Getriebevorrichtung eines Fahrzeugs, wobei die Vorrichtung ein Hydraulikgetriebe umfasst, das n Hydraulikmotoren (8), die Laufräder (51, 52) des Fahrzeugs antreiben, wobei n eine natürliche ganze Zahl ungleich null ist, und eine Hydraulikpumpe (7) aufweist, die ausgelegt ist, um über ein Getriebe (1) angetrieben zu werden, um die Hydraulikmotoren (8) mit Fluid zu versorgen,
wobei der Hubraum der Hydraulikpumpe (7) gesteuert wird, damit er den n Hydraulikmotoren (8) einen konstanten Durchfluss proportional zu der Geschwindigkeit der Haupträder (31, 32) zuführt, die durch das Getriebe (1) in Drehung versetzt werden,
**dadurch gekennzeichnet, dass** die Steuerung des Hubraums der Hydraulikpumpe (7) mittels einer Korrekturkonstanten (Cc) und einer Korrekturvariablen (Vc) umgesetzt wird,
wobei die Korrekturvariable (Vc) in Echtzeit bestimmt wird,
wobei die Korrekturkonstante (Cc) aus der Summe einer theoretischen Konstanten (Ct) und einer angepassten Konstanten (Ca) besteht, wobei die theoretische Konstante (Ct) in Abhängigkeit des theoretischen Verhaltens des Hydraulikgetriebes definiert wird und die angepasste Konstante (Ca) definiert und korrigiert wird, wenn sich das Fahrzeug in vorbestimmten Verwendungsbedingungen befindet, um den Echtzustand des Fahrzeugs auszudrücken.

2. Verfahren nach Anspruch 1, wobei die angepasste Konstante (Ca) in einer Speichereinheit gespeichert wird und bei der Ausführung eines Prüfbefehls überprüft wird.

3. Verfahren nach Anspruch 2, wobei der Prüfbefehl bei jeder Inbetriebnahme des Fahrzeugs umgesetzt wird.

4. Verfahren nach einem der Ansprüche 2 oder 3, wobei bei dem Prüfbefehl der Wert der angepassten Konstanten (Ca) modifiziert wird, um gleich einem Prozentsatz des Wertes der Korrekturvariablen (Vc) zu sein, wobei der Prozentsatz zwischen 80 und 95 % beträgt.

5. Verfahren nach einem der Ansprüche 1 bis 4, wobei die angepasste Konstante (Ca) insbesondere den Abrollumfang jeder Achse des Fahrzeugs, die durch einen der Hydraulikmotoren (8) angetrieben wird, die Leistungsvariationen der verschiedenen Komponenten des Hydraulikgetriebes und von mechanischen Elementen des Fahrzeugs ausdrückt.

6. Verfahren nach einem der Ansprüche 1 bis 5, wobei die Korrekturvariable (Vc) kleiner als ein oder gleich einem Schwellenwert ist.

7. Verfahren nach Anspruch 6, wobei ein Fehlersignal gesendet wird, wenn die Korrekturvariable (Vc) einen Wert größer als der oder gleich dem Schwellenwert aufweist.

8. Fahrzeug, umfassend eine Getriebevorrichtung, die dazu ausgestaltet ist, gemäß dem Verfahren nach einem der Ansprüche 1 bis 7 gesteuert zu werden.

## Claims

1. A method for controlling a transmission device of a vehicle, the device comprising a hydraulic transmission having n hydraulic motors (8) driving the carrying wheels (51,52) of the vehicle, n being a non-zero integer, and a hydraulic pump (7) able to be driven by a drive (1) to supply the hydraulic motors (8) with fluid,
wherein the displacement of the hydraulic pump (7) is piloted so that it delivers a constant flow rate to the n hydraulic motors (8) that is proportional to the speed of main wheels (31, 32) driven in rotation by the drive (1),
**characterized in that** the displacement piloting of the hydraulic pump (7) is carried out by means of a correction constant (Cc) and a correction variable (Vc),
the correction variable (Vc) being determined in real time,
the correction constant (Cc) being composed of the sum of a theoretical constant (Ct) and an adjusted constant (Ca), the theoretical constant (Ct) being defined as a function of the theoretical behavior of the hydraulic transmission, and the adjusted constant (Ca) being defined and corrected when the vehicle is under predetermined conditions of use, in order to reflect the real state of the vehicle.

2. The method according to claim 1, wherein said adjusted constant (Ca) is stored in a memory unit, and reevaluated upon execution of an evaluation command.

3. The method according to claim 2, wherein said evaluation command is performed each time the vehicle is put into operation.

4. The method according to any of claims 2 or 3, wherein during the evaluation command, the value of the adjusted constant (Ca) is changed to be equal to a percentage of the value of the correction variable (Vc), said percentage being comprised between 80 and 95%.

5. The method according to any of claims 1 to 4, wherein the adjusted constant (Ca) reflects in particular the rolling circumference of each axle of the vehicle driven by one of said hydraulic motors (8), the variations in efficiency of the different components of the hydraulic transmission and mechanical elements of the vehicle.

6. The method according to any of claims 1 to 5, wherein the correction variable (Vc) is less than or equal to a threshold value.

7. The method according to claim 6, wherein an error signal is emitted when the correction variable (Vc) has a value greater than or equal to said threshold value.

8. A vehicle comprising a transmission device configured to be controlled according to the method of any one of claims 1 to 7.
